# EUROPÄISCHE PATENTSCHRIFT

(11) **EP 2 793 238 B1**
(45) Veröffentlichungstag und Bekanntmachung des Hinweises auf die Patenterteilung: **23.05.2018**
(21) Anmeldenummer: 14001360.8
(22) Anmeldetag: 15.04.2014
(51) Int. Cl.: G05B 19/04

(54) **Fluidtechnisches Steuerungssystem für hydraulische und/oder pneumatische Stellglieder**
Fluid technology control system for hydraulic and/or pneumatic actuators
Système de commande fluidique d'actionneurs hydrauliques et/ou pneumatiques

(30) Priorität: 15.04.2013 DE 102013006345
(43) Veröffentlichungstag der Anmeldung: 22.10.2014
(73) Patentinhaber: Tries GmbH & CO. KG, 89584 Ehingen (DE)
(72) Erfinder: Bachhofer, Matthias, 89584 Ehingen-Mühlen (DE); Herzog, Robert, 89614 Öpfingen (DE)
(74) Vertreter: Otten, Roth, Dobler & Partner mbB Patentanwälte

(56) Entgegenhaltungen:
- EP-A2- 1 471 480
- WO-A1-2012/156207
- DE-A1-102005 049 483
- DE-U1-202006 015 797
- US-B1- 6 651 110

## Beschreibung

Die Erfindung betrifft ein fluidtechnisches Steuerungssystem nach dem Oberbegriff des Patentanspruchs 1.

In der DE 10 2007 029 423 A1 wird ein Steuerungssystem beschrieben, das einen Datenspeicher in einem Verbindungskabel aufweist.

Im Bereich der Fluidtechnik, insbesondere im Bereich der Hydraulik und/oder Pneumatik sind vielfach elektronisch ansteuerbare Stellglieder in Gebrauch, die mittels einer elektronischen Kontrolleinheit angesteuert werden. Die elektronische Kontrolleinheit, die mit einem oder mehreren derartigen Stellgliedern in der Regel über Kabel oder Kabelbäume verbunden ist, kann dabei individuell auf die jeweils angeschlossenen Stellglieder angepasst sein. Dies ist insbesondere dann notwendig, wenn die vom jeweiligen Stellglied einzustellenden Stellgrößen mit einer größeren Genauigkeit eingestellt werden müssen, wie sie durch die Toleranz im Aufbau des Stellglieds gewährleistet ist. In einem solchen Fall wird ein solches Stellglied individuell getestet und die zugehörigen Steuerparameter bei der Anpassung der elektronischen Kontrolleinheit in diese implementiert, sodass die Kontrolleinheit und das Stellglied jeweils individuell aufeinander abgestimmt sind, um eine größere Genauigkeit beim Ansteuern der Stellgröße zu erreichen.

Dies hat zur Folge, dass beim Austausch des Stellglieds, beispielsweise infolge eines Defekts, nicht nur das Stellglied selbst, sondern auch die elektronische Kontrolleinheit ausgetauscht oder zumindest angepasst werden muss. Da diese Anpassung häufig nicht vor Ort, am Einsatzort der entsprechenden Hydraulikeinheit durchführbar ist, wird häufig ein kompletter Steuerblock, bestehend aus einem Verteilerblock für das hydraulische Fluid zusammen mit den daran angeordneten Stellelementen und der zugehörigen elektronischen Kontrolleinheit ausgebaut und zum Hersteller der entsprechenden Hydraulik- und/oder Pneumatikanlage oder -maschine verbracht wird. Der Aufwand, der hierdurch entsteht, ist entsprechend hoch.

Da in der Kontrolleinheit häufig nicht nur die individuellen Parameter der anzusteuernden Stellglieder, sondern auch Zeitabläufe für die Ansteuerung der Stellglieder im Betrieb, d. h. Steuerprogramme und/oder Programmpakete, hinterlegt sind, sind derartige vorkonfigurierte Kontrolleinheiten nur sehr eingeschränkt, d. h. nur bei den dafür vorgesehenen Stellgliedern und nur für die dafür vorgesehenen steuertechnischen Anwendungen einsetzbar.

Wird die Kontrolleinheit auf der anderen Seite mit einem elektronischen Bus einer Maschine oder Anlage verbunden, so wird bislang die Busadressierung zumindest teilweise fest in der Kontrolleinheit implementiert, was wiederum die Flexibilität in der Verwendung der Kontrolleinheit beschränkt.

Darüber hinaus offenbart die Druckschrift EP 1 471 480 A2 eine Vorrichtung zur Erfassung oder Beeinflussung einer physikalischen Größe und zur Kommunikation mit einer zentralen Prozesssteuereinheit, wobei Kommunikationsdaten und Sensor- bzw. Aktordaten physisch voneinander getrennt sind.

Aufgabe der Erfindung ist es, eine größere Sicherheit für den Einsatz der elektronischen Kontrolleinheit für elektrisch ansteuerbare hydraulische und/oder pneumatische Stellglieder zu bewirken.

Dies wird erfindungsgemäß durch ein fluidtechnisches Steuerungssystem gemäß dem Oberbegriff des Anspruchs 1 in Verbindung mit dessen kennzeichnenden Merkmalen erreicht.

Durch die in den Unteransprüchen genannten Maßnahmen sind vorteilhafte Ausführungen und Weiterbildungen der Erfindung möglich.

Dementsprechend zeichnet sich ein fluidtechnisches Steuerungssystem nach dem Oberbegriff des Anspruchs 1 dadurch aus, dass die Verbindungsvorrichtung einen ersten Datenspeicher aufweist, in dem spezifische Daten wenigstens eines durch die Kontrolleinheit mit dem Stellglied oder den anzuschließenden Stellgliedern durchzuführenden Steuerungsablaufs gespeichert sind und dass das Stellglied einen weiteren, zweiten Datenspeicher aufweist, in dem spezifische Daten des Stellglieds gespeichert sind, und dass die Kontrolleinheit einen dritten Datenspeicher aufweist, in den bei Verbinden des fluidtechnischen Stellglieds oder der fluidtechnischen Stellglieder und/oder der elektrischen Verbindungsvorrichtung die Daten des ersten Datenspeichers und/oder des zweiten Datenspeichers wenigstens teilweise abspeicherbar sind.

Durch diesen dritten Datenspeicher ergibt sich eine deutliche Verbesserung der Funktionssicherheit im Falle eines Defekts des ersten und/oder des zweiten Datenspeichers.

Durch eine solche Maßnahme ist die Kontrolleinheit in der Lage, die Funktionssicherheit des fluidtechnischen Steuerungssystems zu gewährleisten, auch wenn der erste und/oder der zweite Datenspeicher einen Defekt aufweisen, da deren Daten mit dem ersten Übertrag an die Kontrolleinheit im dritten Datenspeicher bereit liegen. Bei Austausch der Verbindungsvorrichtung und/oder des Stellglieds können die Daten im dritten Datenspeicher dann aktualisiert und damit auch die Parametrierung oder Konfiguration der Kontrolleinheit aktualisiert werden.

Die spezifischen Daten des ersten und zweiten Datenspeichers ermöglichen die spezifische Anpassung der elektronischen Kontrolleinheit an zugehörige Stellglieder und/oder spezifische Anwendungen durch Anbringen der elektrischen Verbindungsvorrichtung zwischen der Kontrolleinheit und dem Stellglied. Dies kann dabei vor Ort, beispielsweise nach dem Austausch des Stellglieds und/oder der elektronischen Kontrolleinheit stattfinden.

Durch die Erfindung kann so eine standardisierte elektronische Kontrolleinheit für eine Vielzahl von Anwendungen und/oder Stellglieder eingesetzt werden. Die Anpassung der Kontrolleinheit an die spezifische Anwendung und/oder individuelle Stellglieder wird zugleich mit der Herstellung der elektrischen Verbindung zwischen Kontrolleinheit und dem Stellglied beziehungsweise den Stellgliedern bewirkt.

Der Ausdruck "fluidtechnisch" ist dabei so zu verstehen, dass sowohl hydraulische, als auch pneumatische Stellglieder durch das fluidtechnische Steuerungssystem steuerbar sind. Stellglieder können dabei elektrisch steuerbare Steuerventile für hydraulische oder pneumatische Zylinder, Motoren oder weitere hydraulische bzw. pneumatische Aktoren sein. Eine erfindungsgemäße Verbindungsvorrichtung kann ein Kabel oder ein Kabelbaum oder eine drahtlose Kommunikationsverbindung zwischen Kontrolleinheit und Stellglied sein.

Eine Kontrolleinheit gemäß der vorliegenden Erfindung kann sowohl eine Steuereinheit, die die Stellglieder ohne Rückmeldung steuert als auch eine Regeleinheit einer Regelgröße mit einem Soll-/Ist-Wert Vergleich sein.

Die Anpassung der Kontrolleinheit kann sich dabei auf die individuelle Anpassung auf ein bestimmtes Stellglied, beispielsweise auf der Grundlage von Testdaten dieses individuellen Stellglieds beziehen. Sie kann jedoch auch eine Programmabfolge in der Ansteuerung eines oder mehrerer Stellglieder betreffen.

Die Flexibilität für den Einsatz einer solchen Kontrolleinheit wird dadurch erheblich gesteigert. Es kann eine standardisierte Kontrolleinheit für eine Vielzahl verschiedener Anwendungen und eine Vielzahl verschiedener hydraulischer und/oder pneumatischer Stellglieder verwendet werden. Eine Anpassung vor der Montage vor Ort ist nicht erforderlich. In dem Moment, in dem die Kontrolleinheit bei der Erstmontage oder beim Austausch gegen eine defekte Kontrolleinheit mit dem einen oder den mehreren Stellgliedern verbunden wird, wird automatisch die Konfiguration in Bezug auf die jeweiligen Stellglieder und/oder die entsprechende Anwendung mit zugehörigen Steuerungsabläufen bzw. Steuerungsprogrammen und/oder die zugehörige Busanbindung vorgenommen.

Vorzugsweise werden in dem ersten Datenspeicher auch spezifische Daten des Stellglieds gespeichert. Auf diese Weise ist das fluidtechnische Steuerungssystem auch dann funktionsfähig, wenn der zweite Datenspeicher im Stellglied defekt ist. Die Funktionssicherheit des fluidtechnischen Steuerungssystems wird dadurch verbessert.

In einer besonderen Weiterbildung dieser Ausführungsform werden in dem ersten Datenspeicher Default-Daten eines Stellglieds gespeichert. Default-Daten sind Vorgabedaten, die im Falle des Ausfalls des zweiten Datenspeichers an die Stelle der dort vorgesehenen individuellen Kenndaten eines Stellglieds treten können.

Durch Verwendung derartiger Default-Werte ist ein Weiterbetrieb des Steuerungssystems möglich, wobei gegebenenfalls Abstriche hinsichtlich der Genauigkeit, der Toleranzen etc. in Kauf zu nehmen sind.

Fluidtechnische Stellglieder werden oftmals hinsichtlich ihrer Präzision gegenüber den stets vorhandenen Fertigungstoleranzen dahingehend verbessert, dass individuelle Kennlinien in Testabläufen erfasst und abgespeichert werden. So kann beispielsweise für einen Durchflussregler mit erheblich größerer Genauigkeit ermittelt und dann auch eingestellt werden, bei welcher Steuerspannung welcher Durchfluss tatsächlich vorliegt, als dieser in der üblichen Fertigungstoleranz ohne Testmessung einstellbar wäre.

Diese individuellen Kenndaten bzw. Kennlinien können in einem zweiten Datenspeicher eines Stellglieds abgespeichert und somit mit dem Einbau des Stellglieds abrufbar bereitgestellt werden. Werden anstelle dieser individuellen Kenndaten des Stellglieds die oben angeführten Default-Werte verwendet, so ist das Stellglied zwar funktionsfähig, es können jedoch Abweichungen bei der Stellgröße, beispielsweise bei einem einzustellenden Volumenstrom bei vorgegebenen Druck dadurch entstehen, dass nunmehr die elektronische Kontrolleinheit das Stellglied mit Steuerströmen oder Steuerspannungen ansteuert, die zwar eine Einstellung der Stellgröße innerhalb des durch Fertigungstoleranzen vorgegebenen Intervalls gewährleistet, jedoch nicht die Präzision einer Ansteuerung anhand individueller Kenndaten des Stellglieds erreicht.

Der Vorteil dieser Default-Daten liegt allerdings darin, dass sie fest im ersten Datenspeicher hinterlegt werden können.

Eine andere Ausführungsform der Erfindung sieht vor, dass im ersten Datenspeicher ein beschreibbarer Datenbereich vorgesehen ist, der bei Anschluss eines Stellglieds die individuellen Kenndaten des Stellglieds übernimmt. Somit sind bei Ausfall des zweiten Datenspeichers des Stellglieds die tatsächlichen individuellen Kennwerte auch im ersten Datenspeicher verfügbar, sodass die fluidtechnische Steuerung ohne Beeinträchtigung weiter laufen kann.

Bevorzugt wird durch die Steuereinheit im Falle eines Defekts eines Datenspeichers so ausgestaltet, dass eine entsprechende Meldung an den Benutzer erfolgt, sodass der entsprechende Datenspeicher bzw. die zugehörige Baueinheit, wie beispielsweise das Stellglied oder die Verbindungsvorrichtung, ausgetauscht werden kann. Sofern die fluidtechnische Steuerung jedoch auch vor dem Austausch weiter funktionsfähig bleibt, kann das entsprechende Gerät, beispielsweise eine Maschine, wie eine Pistenraupe, eine Baumaschine oder dergleichen weiter betrieben werden, bis das Ersatzteil vor Ort zur Verfügung steht.

In einer vorteilhaften Ausführungsform der Erfindung werden in dem zweiten Datenspeicher auch spezifische Daten wenigstens eines durch die Kontrolleinheit mit dem Stellglied oder den anzuschließenden Stellgliedern durchzuführenden Steuerungsablaufs gespeichert.

Dies ist beispielsweise dadurch realisierbar, dass in dem zweiten Datenspeicher ein beschreibbarer Speicherbereich vorgesehen wird, in den beim Anschluss einer solchen Verbindungsvorrichtung mit einem ersten Datenspeicher die dort vorhandenen spezifischen Daten über die durchzuführenden Steuerungsabläufe übertragen werden. Diese Maßnahme erhöht die Funktionssicherheit bei einem Defekt des ersten Datenspeichers, da nach dem Übertragen der dort vorhandenen Daten auf den zweiten Datenspeicher diese Daten dort für die Kontrolleinheit zur Verfügung stehen.

Bei einer Weiterbildung des erfindungsgemäßen Steuerungssystems liegen daher je nach Ausführung die ursprünglich der Verbindungsvorrichtung zugeordneten Daten für die Steuerungsabläufe bzw. Steuerungsprogramme sowie die dem Stellglied zuzuordnenden spezifischen Daten des Stellglieds doppelt oder in einer besonderen Ausführungsform sogar dreifach vor. Die doppelte Speicherung hat zur Folge, dass bei Ausfall eines der Datenspeicher, die diese spezifischen Daten beinhalten, die Funktionssicherheit für einen Weiterbetrieb gegeben ist.

Bei dreifacher Abspeicherung ergibt sich eine noch höhere Funktionssicherheit, da in diesem Fall sogar zwei Datenspeicher einen Defekt aufweisen können, ohne dass die Funktion des Steuerungssystems gefährdet ist.

Ist beispielsweise der zweite Datenspeicher eines Stellglieds defekt und fällt zugleich die Kontrolleinheit oder deren dritter Datenspeicher aus, so kann durch Austausch der Kontrolleinheit ein funktionstüchtiges Steuerungssystem hergestellt werden. Wie bereits oben erwähnt, sind bei einem Steuerungssystem gemäß der Erfindung die Kontrolleinheiten nicht vorparametriert oder vorkonfiguriert, sodass es ohne Weiteres möglich ist, eine solche Einheit für den Ausfall in unterschiedlichsten Funktionen vorzuhalten. Bei Maschinen oder Anlagen mit einem erfindungsgemäßen fluidtechnischen Steuerungssystem kann daher leicht eine einzige Kontrolleinheit als Ersatzteil für verschiedene Kontrolleinheiten in unterschiedlichen Funktionen bevorratet werden.

Bei der dreifachen Abspeicherung der verschiedenen Daten wie oben angeführt, ist es bei Austausch einer Kontrolleinheit daher unerheblich, ob noch einer der beiden weiteren Datenspeicher einen Defekt aufweist.

Sind die Daten nach Austausch einer Kontrolleinheit vom ersten und vom zweiten Datenspeicher im dritten Datenspeicher in der Kontrolleinheit wieder abgelegt, so ist das fluidtechnische Steuerungssystem wiederum unempfindlich gegenüber einem Defekt des ersten und/oder des zweiten Datenspeichers.

In der Regel sind Verbindungsvorrichtungen gemäß der Erfindung in Form eines Kabels mit beidseitigen Anschlussstücken, wie Steckern oder Buchsen oder aber auch als sogenannte Kabelbäume mit einer Mehrzahl derartiger Anschlusselemente ausgebildet.

In vielen Anwendungsfällen werden die Stellelemente dabei zu einem oder mehreren Fluidverteilerblöcken zusammengefasst, an denen mehrere verschiedene Stellglieder für unterschiedliche Aktoren angebracht werden.

Häufig handelt es sich dabei um modulare Fluidverteilerblöcke, sodass bei Anwendung der Erfindung die Veränderung eines solchen modulförmigen Verteilerblocks, beispielsweise durch Austausch, Hinzufügen oder Entfernen eines Moduls ebenfalls erheblich vereinfacht wird.

Die erfindungsgemäß anzusteuernden fluidtechnischen Stellglieder sind in der Regel elektrisch steuerbare Ventile, die in einem hydraulischen und/oder pneumatischen Schaltkreis zum Einsatz kommen.

Wie bereits oben angedeutet, umfassen die Daten des zweiten Datenspeichers vorteilhafterweise individuelle Parameter des Stellglieds. Dies ist insbesondere dann von Vorteil, wenn die Genauigkeit, mit der die Stellgröße des Stellglieds angesteuert werden soll, größer ist als die Toleranz des Stellglieds aufgrund fertigungstechnischer Toleranzen. In diesem Fall kann beispielsweise die Ansteuerung des Stellglieds auf der Grundlage von Testdaten des individuell ausgetesteten Stellglieds erfolgen, um eine exaktere Einstellung der Stellgröße zu bewirken. Eine solche Stellgröße kann beispielsweise ein Druck oder ein Volumenstrom im jeweiligen hydraulischen und/oder pneumatischen Schältkreis sein, der über das Stellglied eingestellt wird. Durch Verwendung von Testdaten kann eine Standardansteuerung des Stellglieds derart modifiziert werden, dass eine Kompensation einer aufgrund der Fertigungstoleranzen vorhandenen Abweichung, die beispielsweise im Testbetrieb des Stellglieds erfassbar ist, durch Anpassung der Ansteuerung ermöglicht wird.

So können die spezifischen Daten eines zweiten Datenspeichers, beispielsweise Kennfelder aufweisen, die individuell dem jeweiligen Stellglied zuzuordnen sind.

Weiterhin können die spezifischen Daten des ersten Datenspeichers der Verbindungsvorrichtung auch Programme für den vorbestimmten Einsatz des Stellglieds umfassen. Dies ist insbesondere dann von Vorteil, wenn ein automatischer Steuerungsablauf in der jeweiligen Kontrolleinheit vorgesehen ist.

Dieser Zeitablauf ist in der Regel anwendungsspezifisch und kann die Ansteuerung auch mehrerer Stellglieder durch ein gemeinsames Steuerkommando umfassen, das z.B. durch Bedienung einer Bedieneinheit einer Maschine ausgelöst wird. Durch die spezifische Anpassung der Kontrolleinheit über die erfindungsgemäße Verbindungsvorrichtung kann diese mit dem Einbau an die erforderlichen Zeitabläufe angepasst werden. So kann mit der erfindungsgemäß angeschlossenen Kontrolleinheit durch Auslesen des ersten Datenspeichers der Verbindungsvorrichtung dieses Kommando in eine Steuerungsabfolge, wie beispielsweise Ausklappen, Absenken der Anbaueinheit einer Maschine, insbesondere einer fahrbaren Maschine, und/oder Starten eines Hydraulikmotors durch entsprechend zeitlich gegliederter Ansteuerung von Stellgliedern für unterschiedliche Aktoren umgesetzt werden.

Die spezifischen Daten können dabei prinzipiell in dem in den ersten und/oder zweiten Datenspeicher der Verbindungsvorrichtung oder des Stellglieds verbleiben, werden jedoch vorteilhafterweise in die entsprechende Kontrolleinheit ausgelesen, sodass die Daten dann direkt in der Kontrolleinheit vorliegen und ein gegebenenfalls nach Herstellung des Anschlusses eintretender Defekt des Datenspeichers der Verbindungsvorrichtung zu keinem Ausfall der Kontrolleinheit mehr führen kann.

Werden bei jedem Start der Kontrolleinheit die Datenspeicher der Verbindungsvorrichtung und des Stellglieds ausgelesen, so wird dadurch die o.a. Ausführungsform erreicht, bei der keine weiteren Maßnahmen bei Neueinbau oder Austausch der elektrischen Verbindungsvorrichtung und/oder der zugehörigen Kontrolleinheit notwendig sind, da mit jedem Start die Anpassung bzw. Konfiguration der Kontrolleinheit passend zum jeweiligen Datenspeicher erfolgt.

Weiterhin kann eine zusätzliche Anpassung der Kontrolleinheit über den ersten und/oder zweiten Datenspeicher auch darin bestehen, dass eine Busadresse oder ein Busadressbereich für die jeweilige Anwendung aus dem ersten oder zweiten Datenspeicher in eine bis dahin noch nicht adressierte Kontrolleinheit übertragen wird.

Bei modernen Maschinen arbeiten die Steuersysteme in der Regel mit einem Bus oder Feldbus, an den beispielsweise Sensoren oder Aktoren unmittelbar oder aber auch über eine Kontrolleinheit gemäß der Erfindung angeschlossen sein können.

Bei einem erfindungsgemäßen Steuerungssystem werden Steuerkommandos, die durch eine Bedienperson ausgelöst werden über den Bus bzw. dessen Busleitung mittels eines Steuergerätes gesendet. Diese Steuerkommandos werden von einer Kontrolleinheit gemäß Anspruch 1 ausgelesen und in entsprechende Steuersignale für ein oder mehrere Stellglieder umgesetzt.

Ein Steuerkommando zum Beispiel für eine Pistenraupe, beispielsweise das Kommando "Anbaugerät anheben", das über ein Steuergerät auf eine Busleitung gesendet wird, muss von der Kontrolleinheit ausgelesen werden, die zur Ansteuerung der zugehörigen Aktoren bzw. Stellglieder vorgesehen ist. Diese Kontrolleinheit ist wiederum über die erfindungsgemäße Verbindungsvorrichtung mit den zugehörigen Stellgliedern verbunden und erhält über den ersten oder zweiten Datenspeicher der Verbindungsvorrichtung die zugehörige Adressierung in Form einer Adresse und/oder eines Adressbereiches, sodass ohne weitere Konfigurationsmaßnahmen die Kontrolleinheit auch nach einem Neueinbau die für die jeweilige Anwendung gedachten Kommandos durch Erkennung der zugehörigen Adresse oder Adressen aus dem Datenbus ausliest und umsetzt.

Auch hierdurch wird der Einbau und/oder der Austausch einer Kontrolleinheit erheblich vereinfacht. Es kann wiederum eine Standard-Kontrolleinheit ohne vorherige Adressierung verwendet werden, die vor Ort aufgrund der gegenständlichen Zuordnung zur erfindungsgemäßen elektrischen Verbindungsvorrichtung anwendungsspezifisch parametriert oder konfiguriert wird.

Der erste Datenspeicher wird vorzugsweise in einem Chip vorgesehen, der mit einem Anschlusselement zum Anschluss der Verbindungsvorrichtung an die Kontrolleinheit verdrahtet ist. Dieser Chip kann beispielsweise im Innern der Isolation oder einer sonstigen Ümmantelung der Verbindungsvorrichtung untergebracht sein, sodass er von außen nicht sichtbar ist. Durch Einsatz der vorkonfigurierten Verbindungsvorrichtung, beispielsweise eines Verbindungskabels oder eines entsprechenden Kabelbaums, kann die Kontrolleinheit damit aus dem fest verdrahteten ersten Datenspeicher die gewünschten Daten auslesen.

Die Verdrahtung des ersten Datenspeichers wird vorzugsweise parallel zur sonstigen Verbindungsverdrahtung ausgebildet, sodass mit Anschließen der erfindungsgemäßen Verbindungsvorrichtung ein von den gleichermaßen anzuschließenden Stellgliedern vollständig unabhängiger Anschluss des Datenspeichers möglich ist, der dadurch weniger störanfällig wird.

Grundsätzlich kann ein Teil der Verdrahtung auch über eine zu einem Stellglied führende Leitung geführt werden, beispielsweise kann eine Spannungsversorgung für den Datenspeicher von der Versorgungsleitung für ein Stellglied abgezweigt werden.

Grundsätzlich ist auch eine drahtlose Anbindung des erfindungsgemäßen ersten und/oder zweiten Datenspeichers möglich, wobei die fest verdrahtete Version aufgrund der ohnehin vorhandenen elektrischen Verbindungen keinen Mehraufwand bedeutet und die entsprechenden Drahtlossender und -empfänger entbehrlich sind. Eine drahtlose Variante kann beispielsweise in Form sogenannter RFIDs ausgestaltet sein.

Wie bereits oben erwähnt, wird die erfindungsgemäße Verbindungsvorrichtung bevorzugt als Kabelbaum ausgestaltet, der ein oder mehrere Kontrolleinheiten bevorzugt mit mehreren Stellgliedern verbindet. Diese Stellglieder werden üblicherweise funktional zu Steuerblöcken zusammengefasst, die u. a. auch modular aufgebaut sein können, beispielsweise wie in der DE 10 2007 005 833 A1 beschrieben. Üblicherweise wird ein Kabelbaum pro Steuerblock verwendet, wobei ein solcher Steuerblock einen Fluidverteilerblock mit zugehörigen Stellgliedern umfasst. Grundsätzlich können jedoch auch mehrere derartige Verteilerblöcke über einen Kabelbaum mit einem oder mehreren Kontrolleinheiten verbunden werden.

Ein Ausführungsbeispiel der Erfindung ist in der Zeichnung dargestellt und wird nachfolgend anhand der Figur näher erläutert.

Im Einzelnen zeigen
- Figur: eine schematische perspektivische Darstellung einer erfindungsgemäßen Verbindungsvorrichtung angeschlossen an eine Kontrolleinheit,
- Figur 2: eine Steuerspule für ein fluidtechnisches Ventil in perspektivischer Darstellung,
- Figur 3: eine Steuerspule gemäß Figur 2 in aufgeschnittener Darstellung,
- Figur 4: einen Steuerblock mit fluidtechnischen Steuerventilen nach dem Stand der Technik und
- Figur 5: einen Steuerblock gemäß Figur 4 mit erfindungsgemäßen Steuerventilen.

Die elektrische Verbindungsvorrichtung gemäß dem Ausführungsbeispiel ist als Kabelbaum 1 ausgestaltet. Der Kabelbaum 1 umfasst verschiedene Verbindungskabel 2, die mit entsprechenden Anschlusssteckern 3, 4, 5, 6 zum Anschluss an nicht dargestellte Stellelemente, beispielsweise Ventile eines Hydraulik- und/oder Pneumatikschaltkreises versehen sind.

Ein weiterer Anschlussstecker 7 ist zur Verbindung mit einer Kontrolleinheit 8 vorgesehen. Bei der Installation des Kabelbaums 1 müssen vom jeweiligen Monteur lediglich die entsprechenden Anschlussstecker 3, 4, 5, 6, 7, 8 gesteckt werden.

Der Kabelbaum 1 umfasst weiterhin einen ersten elektronischen Datenspeicher 9, der einen nicht näher dargestellten Speicherchip beinhaltet.

Der erste Datenspeicher 9 ist im vorliegenden Ausführungsbeispiel über ein von den Verbindungskabeln 2 verschiedenes Verbindungskabel 10 mit der Kontrolleinheit 8 verbunden.

Die Kontrolleinheit 8 umfasst weiterhin eine weitere Anschlussbuchse 11, um sie in nicht näher dargestellter Weise mittels eines weiteren Verbindungskabels mit einem Datenbus zu verbinden.

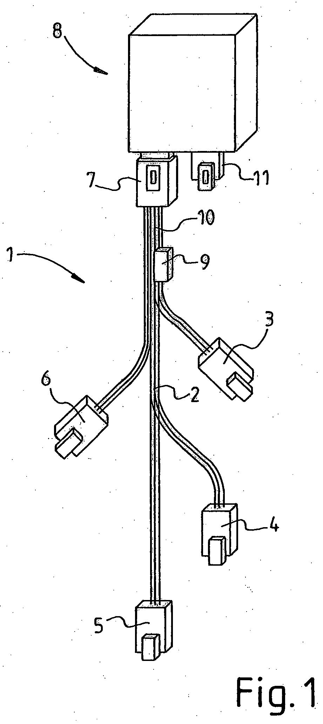

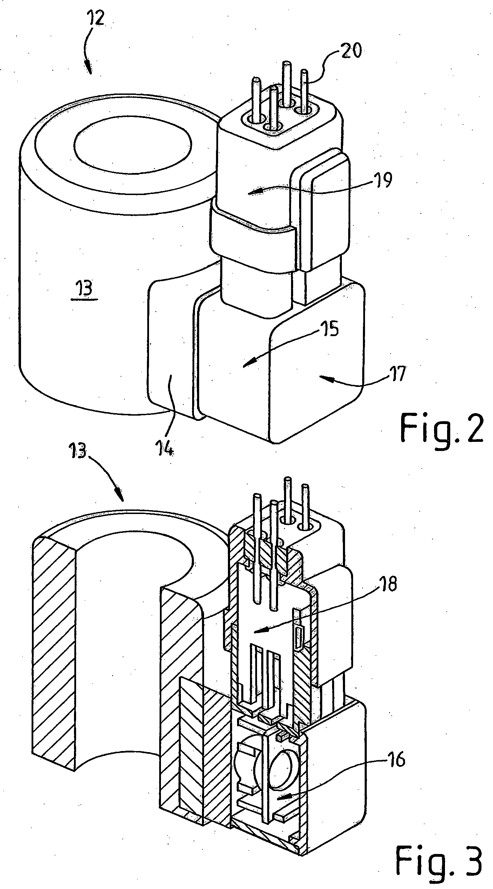

In Figur 2 ist die Steuerspule 12 eines fluidtechnischen Stellglieds, beispielsweise eines Ventils, zu sehen. Der Spulenkörper selbst ist in einem Gehäuse 13 untergebracht, beispielsweise vergossen, das einen Ansatz 14 für die elektrischen Anschlüsse aufweist.

In der dargestellten Ausführungsform ist auf diesen Ansatz 14 mit den elektrischen Anschlüssen ein Adapter 15 gesteckt, der eine Leiterplatte mit einem zweiten Datenspeicher 16 (siehe Figur 3) beinhaltet. Die Verwendung eines Adapters 15 ermöglicht die Nach- oder Aufrüstung eines herkömmlichen Stellglieds mit einem zweiten Datenspeicher 16 gemäß der Erfindung. Auch der Austausch eines zweiten Datenspeichers 16 ohne Austausch eines Stellgliedes wird hierdurch möglich.

Der Adapter 15 ist mit einem Deckel 17 verschlossen. Auf dem Adapter 15 befindet sich ein Stecker 18, der über eine Abdeckung 19 vor Schmutz, Feuchtigkeit sowie mechanischer Belastung geschützt ist. Die Abdeckung 19 kann dabei Dichtelemente, Knickschutzelemente oder dergleichen beinhalten.

Beispielshaft sind vier Einzelkabel 20 aus dem Stecker 18 bzw. dessen Abdeckung 19 herausgeführt, an dieser Stelle kann jedoch auch mehradriges Einzelkabel eingesetzt werden.

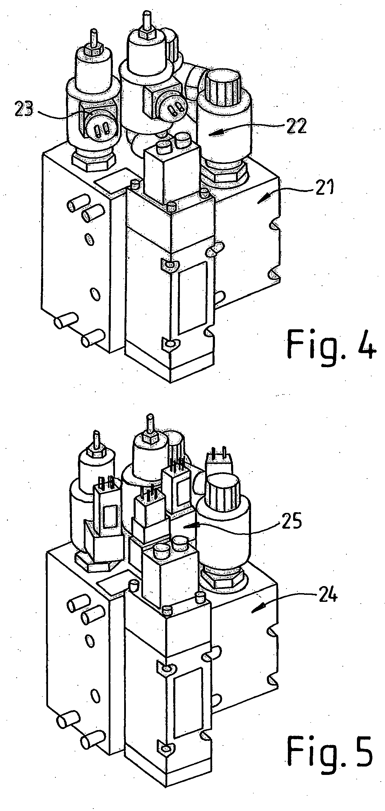

In Figur 4 ist ein Steuerblock 21 mit verschiedenen Steuerventilen 22dargestellt, die konventionell ausgestaltet sind, das heißt, auf deren Ansatz 23 mit den zugehörigen Anschlüssen befindet sich kein Adapter 15 mit erfindungsgemäßen zweiten Datenspeicher 16.

In Figur 5 ist ein Steuerblock 24 dargestellt, bei dem die Steuerventile mit einem Adapter 15 ausgestattet sind und die somit einen erfindungsgemäßen zweiten Datenspeicher 16 aufweisen.

Mit dem Anschluss des Kabelbaums 1 an die Kontrolleinheit 8 und die Steuerventile 15 sind sämtliche Parameter, Kenndaten, wie Kennlinien, usw. und Programmdaten, die die Kontrolleinheit 8 benötigt, um die an den Anschlusssteckern 3, 4, 5, 6 angeschlossenen Steuerventile zu bedienen, durch die Kontrolleinheit 8 abrufbar. Somit kann eine Standardversion der Kontrolleinheit 8 Verwendung finden, die für den jeweiligen Einsatzzweck nicht vorkonfiguriert werden braucht. Die Kontrolleinheit 8 kann an unterschiedlichen Stellen, beispielsweise in einer Maschine oder einem Arbeitsfahrzeug eingesetzt werden, insbesondere um Zusatzgeräte zu steuern. Ein solches Fahrzeug kann mehrere, vor dem Einbau gleich ausgebildete Standardkontrolleinheiten 8 aufweisen, die unterschiedliche Steueraufgaben ausführen sollen, beispielsweise für Anbaugeräte an Fronthydraulikeinheiten, für Anbaugeräte an Heckhydraulikeinheiten, für Aufbauten mit Auslegern oder dergleichen. Da die Kontrolleinheit 8 einheitlich als Standardeinheit ausgeführt werden kann, ist der Austausch einer Kontrolleinheit 8 denkbar einfach und kann vor Ort durch einen Monteur ohne Konfiguration oder Programmierung der Kontrolleinheit 8 vorgenommen werden.

Auch der Austausch oder Neueinbau eines Stellglieds, das an den Anschlusssteckern 3, 4, 5, 6 anzuschließen ist, ist vereinfacht, da hierzu die Kontrolleinheit 8 ebenfalls nicht individuell angepasst werden muss. Selbst wenn eine individuelle Ansteuerung eines Stellglieds, beispielsweise, wenn wie im oben dargestellten Fall die Toleranzen eines Stellglieds die geforderte Ansteuergenauigkeit überschreitet und mit individuellen Kenndaten gearbeitet werden muss, kann die Parametrierung der Kontrolleinheit 8 über den zweiten Datenspeicher 16 des Stellglieds zum Beispiel eines Steuerventils 25 und/oder den ersten Datenspeicher 9 des Kabelbaums erfolgen.

Zusätzlich ist es auch möglich, in einem oder beiden Datenspeichern 9, 16 eine Adresse oder einen Adressbereich für die Kontrolleinheit zum Einsatz in einem Datenbus zu hinterlegen, wobei die Adresse bzw. der Adressbereich wiederum der entsprechenden Anwendung zugeordnet ist, die über die mit der Verbindungsvorrichtung angeschlossenen Stellgliedern definiert ist.

Die Erfindung ist nicht auf das beschriebene Ausführungsbeispiel beschränkt. Hieraus wird jedoch ersichtlich, dass durch Abspeicherung von Daten, insbesondere Parameter bezüglich der Stellglieder, der zu steuernden Programmabläufe und/oder der Teilnehmeradresse an einem Datenbus der Einbau und Austausch von Stellgliedern sowie von Kontrolleinheiten 8 erheblich vereinfacht und flexibler ist. Insbesondere brauchen Kontrolleinheiten 8 nicht speziell oder individuell vorkonfiguriert werden, es können vielmehr Standardsteuerungen für eine Vielzahl von Anwendungen verwendet werden.

Stellglieder, beispielsweise Steuerventile können vor Ort am Einsatzort der jeweiligen Maschine im Falle eines Defekts ausgetauscht und mittels eines dem neuen Stellglied zugeordneten Kabelbaums 1 ohne Änderung an der Kontrolleinheit 8 angeschlossen werden.

### Bezugszeichenliste:

- 1: Kabelbaum
- 2: Verbindungskabel
- 3: Anschlussstecker
- 4: Anschlussstecker
- 5: Anschlussstecker
- 6: Anschlussstecker
- 7: Anschlussstecker
- 8: Kontrolleinheit
- 9: erster Datenspeicher
- 10: Verbindungskabel
- 11: Anschlussbuchse
- 12: Steuerspule
- 13: Spulengehäuse
- 14: Ansatz
- 15: Adapter
- 16: zweiter Datenspeicher
- 17: Deckel
- 18: Stecker
- 19: Abdeckung
- 20: Kabel
- 21: Steuerblock
- 22: Steuerventil
- 23: Ansatz
- 24: Steuerblock
- 25: Steuerventil

## Patentansprüche

1. Fluidtechnisches Steuerungssystem mit wenigstens einem fluidtechnischem Stellglied (22), mit einer elektronischen Kontrolleinheit (8) zur Kontrolle des wenigstens einen elektrisch steuerbaren fluidtechnischen Stellglieds (22) und mit einer elektrischen Verbindungsvorrichtung (1) zum Verbinden mit dem wenigstens einen Stellglied mittels wenigstens einem Kabel (2, 10), **dadurch gekennzeichnet, dass** die Verbindungsvorrichtung (1) einen ersten Datenspeicher (9) aufweist, in dem spezifische Daten wenigstens eines durch die Kontrolleinheit (8) mit dem Stellglied (22) oder den anzuschließenden Stellgliedern durchzuführenden Steuerungsablaufs gespeichert sind, wobei das Stellglied (22) einen weiteren, zweiten Datenspeicher (16) aufweist, in dem spezifische Daten des Stellglieds (22) gespeichert sind, und wobie die Kontrolleinheit (8) einen dritten Datenspeicher aufweist, in den beim Verbinden des fluidtechnischen Stellgliedes (22) oder der fluidtechnischen Stellglieder und/oder der elektrischen Verbindungsvorrichtung (1) die Daten des ersten Datenspeichers (9) und /oder des zweiten Datenspeichers (16) wenigstens teilweise abspeicherbar sind.

2. Steuerungssystem nach Anspruch 1, **dadurch gekennzeichnet, dass** in dem ersten Datenspeicher (9) auch spezifische Daten des Stellglieds (22) gespeichert sind.

3. Steuerungssystem nach einem der vorgenannten Ansprüche, **dadurch gekennzeichnet, dass** in dem ersten Datenspeicher (9) Default-Daten eines Stellglieds (22) gespeichert sind.

4. Steuerungssystem nach einem der vorgenannten Ansprüche, **dadurch gekennzeichnet, dass** beim Verbinden der elektrischen Verbindungsvorrichtung (1) mit einem Stellglied (22) die spezifischen Daten des Stellgliedes (22) aus dem zweiten Datenspeicher (22) in den ersten Datenspeicher (9) der Verbindungsvorrichtung übertragbar sind.

5. Steuerungssystem nach einem der vorgenannten Ansprüche, **dadurch gekennzeichnet, dass** in dem zweiten Datenspeicher (10) auch spezifische Daten wenigstens eines durch die Kontrolleinheit (8) mit dem Stellglied (22) oder den anzuschließenden Stellgliedern durchzuführenden Steuerungsablaufs gespeichert sind.

6. Steuerungssystem nach einem der vorgenannten Ansprüche, **dadurch gekennzeichnet, dass** die Daten des ersten Datenspeichers (9) Programme für wenigstens einen vorbestimmten Steuerungsablauf beim Einsatz der an die Verbindungsvorrichtung (1) anzuschließenden Stellglieder (22) umfassen.

7. Steuerungssystem nach einem der vorgenannten Ansprüche, **dadurch gekennzeichnet, dass** die gespeicherten Daten des ersten (9) und/oder zweiten (16) Datenspeichers von der Kontrolleinheit (8) bei Bedarf auslesbar sind.

8. Steuerungssystem nach einem der vorgenannten Ansprüche, **dadurch gekennzeichnet, dass** die Daten des ersten (9) und/oder zweiten (16) Datenspeichers eine Busadresse und/oder einen Busadressbereich eines Bussystems umfassen, die der Funktion wenigstens eines der an die Verbindungsvorrichtung (1) anzuschließenden Stellglieds (22) zugeordnet ist.

9. Steuerungssystem nach einem der vorgenannten Ansprüche, **dadurch gekennzeichnet, dass** der erste Datenspeicher (9) einen Speicherchip umfasst, der mit einem Anschlusselement (7) zum Anschluss der Verbindungsvorrichtung (1) an die Kontrolleinheit (8) verdrahtet ist.

10. Steuerungssystem nach einem der vorgenannten Ansprüche, **dadurch gekennzeichnet, dass** die Verdrahtung des ersten Datenspeichers parallel zur sonstigen Verkabelung der Verbindungsvorrichtung ausgebildet ist.

11. Steuerungssystem nach einem der vorgenannten Ansprüche, **dadurch gekennzeichnet, dass** ein Adapter (15) für das Stellglied (22) vorgesehen ist, der den zweiten Datenspeicher (16) umfasst.

12. Steuerungssystem nach einem der vorgenannten Ansprüche, **dadurch gekennzeichnet, dass** die Verbindungsvorrichtung (1) als Kabelbaum ausgebildet ist.

13. Steuerungssystem nach einem der vorgenannten Ansprüche, **dadurch gekennzeichnet, dass** ein Steuerblock (24) vorgesehen ist, mit dem mehrere Stellglieder (22) funktional zusammengefasst sind.

## Claims

1. A fluid technology control system having at least one fluid technology actuator (22), comprising an electronic control unit (8) for controlling the at least one electrically controllable fluid technology actuator (22) and comprising an electrical connection device (1) for connecting to the at least one actuator by means of a cable (2, 10), **characterised in that** the connection device (1) comprises a first data memory (9) in which are stored specific data of at least one control sequence to be carried out by the control unit (8) using the actuator (22) or the actuators to be connected, wherein the actuator (22) comprises a further second data memory (16) in which are stored specific data of the actuator (22) and wherein the control unit (8) comprises a third data memory in which the data of the first data memory (9) and/or of the second data memory (16) can be at least partially stored during connection of the fluid technology actuator (22) or of the fluid technology actuators and/or of the electrical connection device (1).

2. The control system according to claim 1, **characterised in that** specific data of the actuator (22) are also stored in the first data memory (9).

3. The control system according to any one of the preceding claims, **characterised in that** default data of an actuator (22) are stored in the first data memory (9).

4. The control system according to any one of the preceding claims, **characterised in that** the specific data of the actuator (22) are transferable from the second data memory (22) into the first data memory (9) of the connection device, during connection of the electrical connection device (1) to the actuator (22).

5. The control system according to any one of the preceding claims, **characterised in that** specific data of at least one control sequence to be carried out by the control unit (8) using the actuator (22) or the actuators to be connected are also stored in the second data memory (10).

6. The control system according to any one of the preceding claims, **characterised in that** the data of the first data memory (9) comprise programs for at least one predetermined control sequence during use of the actuator (22) that is to be connected to the connection device (1).

7. The control system according to any one of the preceding claims, **characterised in that** the stored data of the first (9) and/or second (16) data memory can be read out by the control unit (8) when necessary.

8. The control system according to any one of the preceding claims, **characterised in that** the data of the first (9) and/or second (16) data memory comprise a bus address and/or a bus address range of a bus system, which is assigned to the function of at least one of the actuators (22) to be connected to the connection device (1).

9. The control system according to any one of the preceding claims, **characterised in that** the first data memory (9) comprises a memory chip that is wired to a coupling element (7) for coupling the connection device (1) to the control unit (8).

10. The control system according to any one of the preceding claims, **characterised in that** the wiring of the first data memory is formed parallel to other cabling of the connection device.

11. The control system according to any one of the preceding claims, **characterised in that** an adapter (15) which comprises the second data memory (16) is provided for the actuator (22).

12. The control system according to any one of the preceding claims, **characterised in that** the connection device (1) is formed as a cable harness.

13. The control system according to any one of the preceding claims, **characterised in that** a control block (24) is provided, by means of which a plurality of actuators (22) is functionally combined.

## Revendications

1. Système de commande fluidique comprenant au moins un actionneur fluidique (22), comprenant une unité de commande électronique (8) pour la commande du au moins un actionneur fluidique (22) pouvant être commandé par voie électrique et comprenant un dispositif de connexion électrique (1) pour la connexion avec le au moins un actionneur au moyen d'au moins un câble (2, 10), **caractérisé en ce que** le dispositif de connexion (1) présente une première mémoire de données (9), dans laquelle des données spécifiques d'au moins une séquence de commande réalisée par l'unité de commande (8) avec l'actionneur (22) ou les actionneurs à connecter sont mémorisées, l'actionneur (22) présentant une autre deuxième mémoire de données (16), dans laquelle des données spécifiques de l'actionneur (22) sont mémorisées et l'unité de commande (8) présentant une troisième mémoire de données, dans laquelle, lors de la connexion de l'actionneur fluidique (22) ou des actionneurs fluidiques et/ou du dispositif de connexion électrique (1), les données de la première mémoire de données (9) et/ou de la deuxième mémoire de données (16) peuvent être mémorisées au moins partiellement.

2. Système de commande selon la revendication 1, **caractérisé en ce que**, dans la première mémoire de données (9), des données spécifiques de l'actionneur (22) sont également mémorisées.

3. Système de commande selon une des revendications précédentes, **caractérisé en ce que**, dans la première mémoire de données (9), des données par défaut d'un actionneur (22) sont mémorisées.

4. Système de commande selon une des revendications précédentes, **caractérisé en ce que**, lors de la connexion du dispositif de connexion électrique (1) avec un actionneur (22), les données spécifiques de l'actionneur (22) peuvent être transmises depuis la deuxième mémoire de données (22) dans la première mémoire de données (9) du dispositif de connexion.

5. Système de commande selon une des revendications précédentes, **caractérisé en ce que**, dans la deuxième mémoire de données (10), des données spécifiques d'au moins une séquence de commande réalisée par l'unité de commande (8) avec l'actionneur (22) ou les actionneurs à connecter sont également mémorisées.

6. Système de commande selon une des revendications précédentes, **caractérisé en ce que** les données de la première mémoire de données (9) comprennent un programme pour au moins une séquence de commande prédéfinie lors de l'utilisation de l'actionneur (22) à connecter au dispositif de connexion (1).

7. Système de commande selon une des revendications précédentes, **caractérisé en ce que** les données mémorisées des première (9) et/ou deuxième (16) mémoires de données peuvent être lues au besoin par l'unité de commande (8).

8. Système de commande selon une des revendications précédentes, **caractérisé en ce que** les données de la première (9) et/ou de la deuxième (16) mémoire de données comprennent une adresse de bus et/ou une zone d'adresse de bus d'un système de bus, qui sont attribuées à la fonction d'au moins un des actionneurs (22) à connecter au dispositif de connexion (1).

9. Système de commande selon une des revendications précédentes, **caractérisé en ce que** la première mémoire de données (9) comprend une puce mémoire, qui est câblée avec un élément de raccordement (7) pour le raccordement du dispositif de connexion (1) à l'unité de commande (8).

10. Système de commande selon une des revendications précédentes, **caractérisé en ce que** le câblage de la première mémoire de données est conçu parallèle au reste du câblage du dispositif de connexion.

11. Système de commande selon une des revendications précédentes, **caractérisé en ce qu'**un adaptateur (15) est prévu pour l'actionneur (22), qui comprend la deuxième mémoire de données (16).

12. Système de commande selon une des revendications précédentes, **caractérisé en ce que** le dispositif de connexion (1) est formé comme un faisceau de câbles.

13. Système de commande selon une des revendications précédentes, **caractérisé en ce qu'**un bloc de commande (24) est prévu, avec lequel plusieurs actionneurs (22) sont regroupés de manière fonctionnelle.
